(19) Europäisches Patentamt
European Patent Office
Office européen des brevets

(11) EP 1 962 462 A1

(12) **EUROPEAN PATENT APPLICATION**

(43) Date of publication:
27.08.2008 Bulletin 2008/35

(51) Int Cl.:
$H04L\ 27/26^{(2006.01)}$

(21) Application number: 07003498.8

(22) Date of filing: 20.02.2007

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Nokia Siemens Networks GmbH & Co. KG**
**81541 München (DE)**

(72) Inventors:
• **Costa, Elena, Dr.**
**81739 München (DE)**
• **Frank, Tobias**
**35305 Grünberg (DE)**
• **Klein, Anja, Prof.**
**64287 Darmstadt (DE)**
• **Schulz, Egon, Dr.**
**80993 München (DE)**

(54) **Method and apparatus for generating a transmit signal for transmitting multiple access data**

(57) The invention relates to a method and an apparatus for generating a transmit signal for transmitting multiple access data by use of transmission system comprising a number N of subcarriers, wherein the number N of subcarriers is subdivided into a number L of blocks of subcarriers, wherein a given subset of at least 2 subcarriers within each block is assigned to the transmission of a signal relating to a specific transmission channel, and wherein the signal corresponding to a data block ($d^{(k)}$) relating to the specific transmission channel to be transmitted in one block of the transmit signal ($T^{(k)}$) is transmitted using the subsets of subcarriers assigned to the specific transmission channel.

In order to provide a method and an apparatus of the above type allowing for a low computational complexity while at the same time suppressing envelope fluctuations, it is proposed that the data block ($d^{(k)}$) is repeated a number P times and compressed in time by the same factor P.

FIG 1

EP 1 962 462 A1

**Description**

**I. <u>TECHNICAL FIELD</u>**

The invention relates to the field of methods for generating a transmit signal for transmitting multiple access data by use of a transmission system, in particular by use for the uplink in a mobile radio system, wherein the radio system comprises a number of subcarriers.

**II. <u>BACKGROUND ART</u>**

Several multiple access schemes have been proposed for generating a transmit signal for transmitting multiple access data by use of transmission system comprising a number of subcarriers.

The basic multiple access scheme is known as a Orthogonal Frequency Division Multiple Access (OFDMA), wherein the subcarriers are modulated simultaneously. In the simplest case, the subcarriers may be divided into blocks of subcarriers and each block of subcarriers is assigned to a specific user or transmission channel. Since the simple OFDMA-schemes suffer from large envelope fluctuations, it has been recently proposed to apply a Discrete Foruier Transform (DFT) precoding prior to the Orthogonal Frequency Division Multiple Access modulation, which results in a multiple access scheme known as Interleaved Frequency Division Multiple Access (IFDMA). An introduction to the IFDMA scheme is given, for example, in an article be T. Frank, A. Klein, E. Costa and E. Schulz "IFDMA - A Promising Multiple Access Scheme for Future Mobile Radio Systems" in proceedings PIMRC 2005, Berlin, Germany, September 2005.

The IFDMA scheme can be efficiently implemented in time domain by compression, repetition and subsequent phase rotation of the data symbol vector. The compression and repetition results in a spreading of the information carrying frequencies in Fourier space and the subsequent phase rotation of the data symbol vector interleaves the frequencies or the corresponding subcarriers belonging to different users.

However, due to the interleaved subcarrier allocation, IFDMA schemes suffer from high pilot symbol overhead for channel estimation, if, e. g. for reasons of power efficiency due to sleep modes of the terminal, a short Time Division Multiple Access (TDMA) component is desired.

Recently, a new scheme providing the key advantages of IFDMA as well as a reduced pilot symbol overhead has been introduced. The new scheme is denoted as Block-IFDMA and it is based on the assignment of blocks of subcarriers to each user. The blocks are equidistantly distributed over the total available band width, such that not the individual subcarriers but blocks of subcarriers being assigned to a specific user are interleaved.

Due to the spreading of the spectrum, the Block-IFDMA scheme provides a good frequency diversity which is comparable to standard IFDMA, while at the same time the channel estimation overhead is reduced, due to the use of blocks of subcarriers which enable interpolation of the channel estimates within each block of subcarriers. Moreover, using an appropriate implementation, the Peak-to-Average Power Ratio (PAPR) of the transmit signal can be significantly reduced compared to OFDMA.

Currently, different realizations resulting in different transmit signals have been proposed for Block-IFDMA. The resulting schemes provide different characteristics. For example, a scheme providing the subcarrier allocation proposed for Block-IFDMA can be obtained by the assignment of multiple IFDMA signals to a specific user and by interleaving the IFDMA signals in a way that the allocated subcarriers form equidistantly distributed blocks over the available band width, wherein the gaps between the blocks may be filled with corresponding blocks of IFDMA signals of other users.

The main advantage of this realization is the efficient implementation due to the utilization of efficient IFDMA signal generation by repetition and compression of the data. However, for this realization, compared to IFDMA, the Peak-to-Average Power Ratio (PAPR) of the transmit signal is significantly increased, since basically uncorrelated signals are superimposed.

Another realization is based on OFDMA modulation with Discrete Fourier Transform precoding. In a first step, a Discrete Fourier Transform precoding is applied to the data symbols to be transmitted within one OFDM symbol. In a second step, the elements of the Discrete Foruier Transform (DFT) are mapped on two blocks of subcarriers equidistantly distributed over the total available bandwidth. Finally, an Orthogonal Frequency Division Multiplex Modulation over the total band width is applied. This solution provides a considerably lower Peak-to-Average Power Ratio (PAPR) compared to a realization as a sum of multiple IFDMA signals. However, in this case, DFT precoding, subcarrier allocation and an OFDM modulation over all subcarriers in the system is required, which results in a higher computational complexity.

**III. <u>DISCLOSURE OF THE INVENTION</u>**

According to one aspect of the invention, the invention seeks to provide a method and a transmission signal generating apparatus for generating a transmit signal for transmitting multiple access data by use of a transmission system which combines the advantages of previously known access schemes, in particular the advantage of a low computational complexity and the advantage of a low Peak-to-Average Power Ratio of the transmit signal.

The invention relates to a method for generating a transmit signal for transmitting multiple access data by use of a transmission system comprising a number N of subcarriers. The subcarriers are allocated in a block-interleaved structure, wherein the number N of subcarriers is subdivided into a number L of blocks of subcarriers and wherein a given subset of at least two subcarriers within each block is assigned to the transmission of a signal relating to a specific user or transmission channel. The signal corresponding to a data block relating to the specific user or transmission channel to be transmitted in one block of the transmit signal is transmitted using the subsets of subcarriers assigned to the specific user or transmission channel.

According to one embodiment of the invention, it is proposed that the data block is repeated a number P times and compressed in time by the same factor P. Independently of the further processing of the data, the step of compressing and repeating the data spreads its frequency spectrum, such that a good frequency diversity may always be guaranteed without a precoding with a high computational complexity.

In comparison with alternative realizations of Block-IFDMA where multiple IFDMA signals are assigned to a specific user, the data block must not be divided up in parts to be encoded in the individual IFDMA signals, such that the correlations of the data are entirely kept. Therefore, it remains possible to generate a signal with a low Peak-to-Average Power Ratio (PAPR) by suitable further processing steps.

According to one aspect of the method according to the invention, it is proposed that each element of the repeated and compressed data block is weighted with the elements of a number M of different sets of complex numbers. The elements of the sets of complex numbers may be chosen according to desired properties of the signal to be transmitted. Suitable correlations in the symbols assigned to individual subcarriers can be achieved if a number M of differently weighted elements of compressed and repeated data are summed up resulting in one of the elements of a block of the transmit signal. In particular, the weighting and summing of the elements may correspond to any suitable unitary and non-unitary coding of the summed elements.

In view of the low PAPR of the transmit singals generated by the proposed method, the advantages of the invention are most apparent if the transmission system is a radio system, since the method enables the use of low-cost amplifiers.

The block-interleaved structure of Block-IFDMA can be reproduced if the elements of the number M of different sets of complex numbers are selected such that the subsets of subcarriers assigned to a specific user are composed of neighbouring subcarriers forming a block. Therefore, the channel estimation overhead is reduced, since, due to the use of blocks of subcarriers, interpolation of the channel estimates within each block of subcarriers is enabled. However, any desired allocation of subcarriers assigned to a specific user within a block of subcarriers may be used.

A particularly low Peak-to-Average Power Ratio can be achieved if the elements of the number M of different sets of complex numbers are selected such that the transmit signal provides a low Peak-to-Average Power Ratio (PAPR).

The assignment to specific users can be realized in a particularly simple way, if the elements of the number M of different sets of complex numbers are selected such that they depend on a user index.

The elements of the sets of complex numbers may be calculated in a particularly simple way, making use of well-tested numerical algorithms, if the elements are selected such that they can be calculated as a sum of complex exponentials.

If the elements of the number M of different sets of complex numbers are independent of the signals to be transmitted, they can be easily computed offline, especially in the uplink between a mobile radio system and a stationary receiving station. This results in less information to be transmitted, such that a short time division multiple access component can be achieved and/or a pilot signal overhead may be reduced. The calculation may be performed during a sleep mode or at any time when there are resources available.

A full exploitation of frequency diversity can be achieved if the factor P is chosen to be equal to N/Q, where Q is the number of symbols in the data block relating to the specific user to be transmitted in one block of the transmit signal.

The above choice of the factor P generates a homogenous distribution of the information carrying frequencies over the available frequency band. One particularly suitable choice of the elements of the M different sets of complex numbers fulfilling all of the above requirements is that the $n^{th}$ element of the $m^{th}$ set of the M different sets of complex numbers assigned to the user with the user index k is given by

$$\Phi_n^{(m,k)} = e^{j\frac{2\pi}{N}M\cdot k\cdot n}\sum_{\eta=0}^{M-1} e^{-j\frac{2\pi}{N}\eta\left((K-1)n+m\frac{N}{M}\right)},$$

wherein M = Q/L is the number of subcarriers with in one block of subcarriers used for transmission of the signal for the specific user and wherein Q is the number of symbols in the data block relating to the specific user to be transmitted in one block of the transmit signal.

Although in this particular example, the number of different sets of complex constants and the number of subcarriers with in one block of subcarriers used for transmission of the signal for the specific user are chosen to be equal, it is possible to exploit symmetries and use a number M of sets of complex constants being different, in particular smaller, than to the number of subcarriers with in one block of subcarriers used for transmission of the signal for the specific user.

A particularly good choice for weighting the elements of the repeated and compressed data with the complex numbers and to sum them up is made, if the $n^{th}$ element of $X_n^{(k)}$ of a block of the transmit signal being assigned to the user with the user index k is given as

$$x_n^{(k)} = \sum_{r=0}^{M-1} \Phi_n^{(r,k)} d_{(rL+n) \bmod Q} \ ,$$

where the $d_i$ is the $i^{th}$ element of the compressed and repeated data block. By applying the above transformation, the data compressed and repeated N-elementary data vector d is cyclically shifted by rL for r=0 ... M-1. The sum is taken over corresponding elements of the differently shifted data vectors.

Furthermore, the invention relates to providing an enhanced transmission signal generating apparatus.

The invention concerns a transmission signal generating apparatus for generating a transmit signal for transmitting multiple access data by use of a transmission system. The transmission system comprises a number N of subcarriers, wherein the number N of subcarriers is subdivided into a number L of blocks of subcarriers and comprises a subcarrier allocation means for allocating a given subset of at least two subcarriers within each block for the transmission of the signal for a specific user. Moreover, the transmission system comprises a subcarrier mapping means for mapping the signal corresponding to the data block of the specific user to be transmitted in one block of the transmit signal onto the subsets of subcarriers assigned to the specific user.

According to one aspect of the invention, it is proposed to provide the transmission signal generating apparatus with a data processing means being configured to repeat the data block of a specific user a number P times and to compress the data block in time by the same factor P.

It is noted that the term "data block" refers to all data relating to one specific user contained in one block of the transmit signal.

In one embodiment of the invention, the data processing means is configured to weight each element of the repeated and compressed data block with the elements of a number M of different sets of complex numbers. The weighting factors may be freely chosen in order to achieve a desired effect on the transmit signal.

A correlation between the data elements is achieved, if the data processing means is configured to sum up a number M of differently weighted elements of the compressed and repeated data block resulting in one of the elements of a block of the transmit signal. By using a suitable summation and weighting algorithm, the summation can be made to correspond to a Discrete Foruier Transformation (DFT) of a sequence composed of selected elements of the compressed and repeated data with a simultaneous mapping on a selected subcarrier.

A subcarrier mapping essentially corresponding to the block Interleaved Frequency Division Multiple Access scheme can be achieved, if the data processing means is configured to select the elements of the number M of different sets of complex numbers such that the subsets of subcarriers assigned to a specific user are composed of neighbouring subcarriers, such that each specific user is assigned to a set of equidistantly distributed blocks of subcarriers covering the whole available frequency range.

If the data processing means is configured to select the elements of the number M of different sets of complex numbers in order to provide a low Peak-to-Average Power Ratio in the transmit signal, the Peak-to-Average Power Ratio can be minimized and, as a consequence, low cost amplifiers can be used in the terminals due to lower effort for signal processing. On the other hand, pilot signal overhead may be prevented, since within the blocks of subcarriers, interpolation of the channels estimates is possible.

If the data processing means is configured to select the elements of the number M of different sets of complex numbers depending on a user index, the assignment of data to the different users can be made particularly simple and transparent.

Furthermore, it is proposed that the data processing means is configured to calculate the elements of the number M of different sets of complex numbers as a sum of complex exponentials. This allows the application of well-tested numerical algorithms resulting in a further decreased computational complexity.

If the data processing means is configured to calculate the elements of the number M of different sets of complex numbers independent of the signal to be transmitted, the calculations can be done offline, which results in minimized pilot signal overhead and in a short time division multiple access component.

If the data processing means is configured to adjust the factor P to be equal to N/Q, where Q is the number of symbols in the data block relating to the specific user to be transmitted in one block of the transmit signal, the available band width can be maximally exploited, which results in an optimal frequency diversity.

Moreover, it is proposed that the data processing means is configured to calculate the $n^{th}$ element of the $m^{th}$ set of the M different sets of complex numbers assigned to the user with the user index k as

$$\Phi_n^{(m,k)} = e^{j2\pi/N(Mk+m)n} \sum_{m=0}^{M-1} e^{j-2\pi/Q m[(rL+n)\bmod Q]} \text{ ,}$$

wherein Q is the number of symbols in the data block relating to the specific user to be transmitted in one block of the transmit signal and M = Q/L is the number of subcarriers within one block of subcarriers used for transmission of the signal for the specific user. The above choice of the complex constants can, if the summation over the weighted elements is suitably performed, result in a block interleaved subcarrier allocation, essentially corresponding to the structure resulting from Block-IFDMA.

The low Peak-to-Average Power Ratio can be achieved simultaneously with a low computation complexity, if the data processing means is configured to calculate the nth element of $x_n^{(k)}$ of a block of the transmit signal being assigned to the user with the user index k as

$$x_n^{(k)} = \sum_{r=0}^{M-1} \Phi_n^{(r,k)} d_{(rL+n)\bmod Q} \text{ ,}$$

where $d_i$ is the $i^{th}$ element of the compressed and repeated data block.

In a numerical implementation, of course, the repetition and compression of the data block may be achieved by a suitable mapping of the indices of the data elements. The repetition can be performed without allocating additional memory by taking the indices modulo the length Q of the data block, wherein the compression may be replaced with a suitable choice of a step width used in summations.

Accroding to a further aspect of the invention, a method is proposed for decoding a transmit signal transmitting multiple access data by use of a transmission system comprising a number N of subcarriers, wherein the number N of subcarriers is subdivided into a number L of blocks of subcarriers, comprising a subcarrier decoding means for mapping the signals transmitted in one block of the transmit signal onto a data blocks of the respective specific users.

The method is characterized in that N/L equally spaced elements of the data block of the received signal are selected and in that the value of one symbol of data block of the specific user is calculated as a weighted sum over the selected elements of the received signal. Such a method is suitable for decoding a signal with low PAPR. A modulo operation can be applied to the indices in order to handle the case where selected indices exceed the total number N of elements of the transmit signal. The same elements of the transmit signal can contribute to more than one symbol of the decoded data of a specific user.

The weight factors used in the summation should be adapted to the weight factors used in the coding algorithm. In the above example the weight factors for the decoding method could be chosen as

$$\Psi_{\mu,q}^{(k)} = \left( \Phi_{(\mu L+q)\bmod N}^{(-\mu \bmod M,k)} \right)^*$$

where $\Phi_n^{(m,k)}$ are the weight factors used in the coding method and where the star denotes the complex conjugate.

The central idea of the invention will become more apparent from the following description of the drawings. The description relates to one embodiment of the invention, where multiple features and method steps are combined.

However, the skilled person will the advantages of the individual features and method steps and will combine them to find new embodiments of the invention being adapted to a specific purpose.

## IV. BRIEF DESCRIPTION OF THE DRAWINGS

Fig. 1 is a schematic representation of a transmit signal resulting from block-interleaved subcarrier allocation.

Fig. 2 is a first scheme for realizing the block-interleaved subcarrier allocation according to the prior art, where the signal is composed as a sum of M Interleaved Frequency Division Multiple Access signals.

Fig. 3 is a second scheme for realizing the block-interleaved subcarrier allocation according to the prior art, using a discrete Foruier Transform-precoded OFDMA.

Fig. 4 is a scheme of the method for generating a transmit signal for transmitting multiple access data according to the invention, where block-interleaved subcarrier allocation is performed in a time domain.

Fig. 5 is a schematic representation of a Transmission signal generating apparatus according to the invention, being comprised in a mobile phone.

Fig. 6 is a scheme of a method for decoding a transmit signal coded according to the method of claim 4.

## V. DETAILED DESCRIPTION OF THE EMBODIMENTS

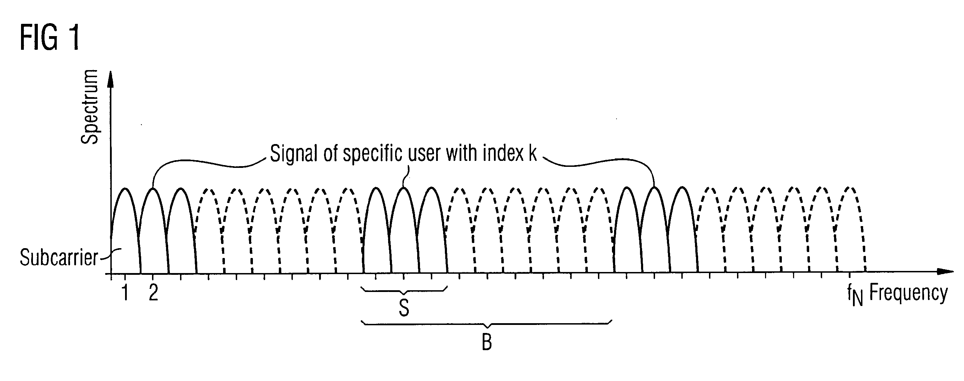

Fig. 1 shows a schematic representation of the principle of block-interleaved subcarrier allocation. Block-interleaved subcarrier allocation is used for generating a transmit signal $T^{(k)}$ for transmitting multiple access data by use of a transmission system comprising number N of subcarriers. The number N of subcarriers is subdivided into a number L of blocks B of subcarriers, wherein for simplicity only a number N of subcarriers is regarded, which is contained in a bandwidth used for transmission of the signal relating to a specific user. The total number of subcarriers of the transmission system may be larger than N, although the frequency diversity is maximally exploited when the whole available bandwidth is used.
Each of the blocks B of subcarriers comprises a subset S of at least two subcarriers being assigned to the transmission of a signal relating to a specific user.
In the example shown in Fig. 1, each block B is composed of 9 subcarriers, wherein the first 3 subcarriers within each block form the subset S, which is assigned to the transmission of a signal relating to a specific user. In the above example, the 4th to 6th subcarrier within each block B may be assigned to a 2nd user and the 7th to 9th subcarrier may be assigned to a 3rd user. Of course, the number of subcarriers within one subset S may vary from user to user, depending on the amount of data to be transmitted by the specific user.
In the method according to the invention, a data block $d^{(k)}$ relating to the specific user with the index k to be transmitted in one block of the transmit signal $T^{(k)}$ is transmitted using the subsets S of subcarriers assigned to the specific user k. In one block of the transmit signal $T^{(k)}$, one OFDM-symbol may be encoded on each subcarrier.
In the above subcarrier mapping, blocks B of subcarriers belonging to different users are interleaved and the mapping pattern in one block B is periodically repeated in the other blocks B. Consecutive blocks B might be separated by guard intervals.
Let Q be the number of data symbols per user to be transmitted in one block of the transmit signal $T^{(k)}$, which is equal to the number Q of data symbols within one data block $d^{(k)}$ for the specific user with user index k. The number M = Q/L then denotes the number of subcarriers within one block B of subcarriers used for transmission of the signal for the specific user. In the example of Fig.1, we have Q=9, L=3 and M = 3.

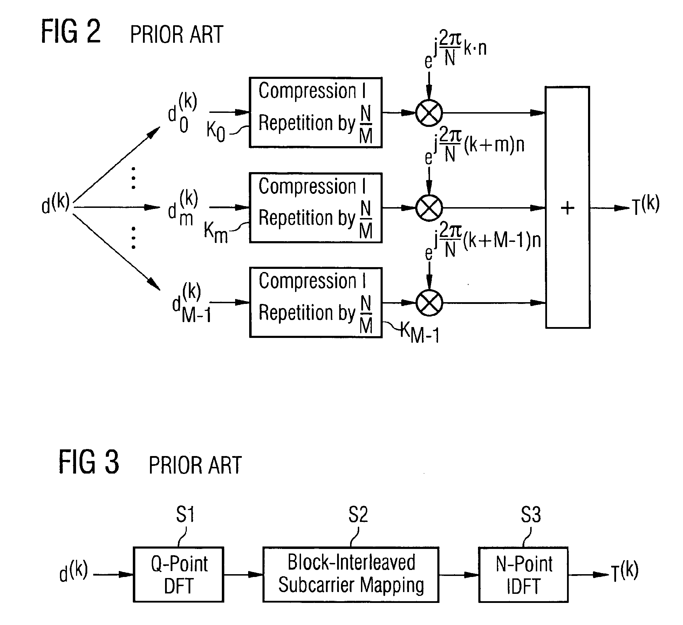

Fig. 2 is a schematic representation for generating a Block-Interleaved Frequency Division Multiple Access signal using a sum of M IFDMA signals. The Q-elementary data block $d^{(k)}$ is subdivided into M Q/M-elementary data symbol vectors of user k, which are denoted $d_m^{(k)}$; m = O, ..., M-1. One IFDMA signal is generated from each of the M data symbol vectors of $d^{(k)}$ user k by the step of $K_0$, ..., $K_{M-1}$ compression and repetition by N/M respectively.
The resulting compressed and repeated data symbol vectors are multiplied with a phase factor exp $(j2\pi/N(k+m)$ n) depending on the user index k, on the index m of the data symbol vector, and of the index N of the element of the transmit signal of user k to be computed. Subsequently, the phase-shifted data vectors $d_m^{(k)}$ are summed up and the sum of the phase-shifted, compressed and repeated data vectors is encoded using OFDM coding or the like in order to generate the transmit signal.

Fig. 3 shows an alternative realization of Block-Interleaved Frequency Division Multiple Access (Block-IFDMA) according to the prior art. The data block $d^{(k)}$ of user k is precoded using a Q-point Discrete Fourier Transform (DFT) in a step S1 and a subsequent block-interleaved subcarrier mapping is applied in step S2, where the different frequency components of the Fourier Transform of the data block are mapped to the respective subsets of subcarriers being assigned to the specific user with the index k. The transmit signal $T^{(k)}$ of user k is generated by performing an N-point Inverse-DFT of the mapped data vector in a step S3.

We note that the Block-IFDMA realization of Fig. 2 suffers from an increased Peak-to-Average Power Ratio, whereas the realization of Fig. 3 suffers from a high computational complexity.

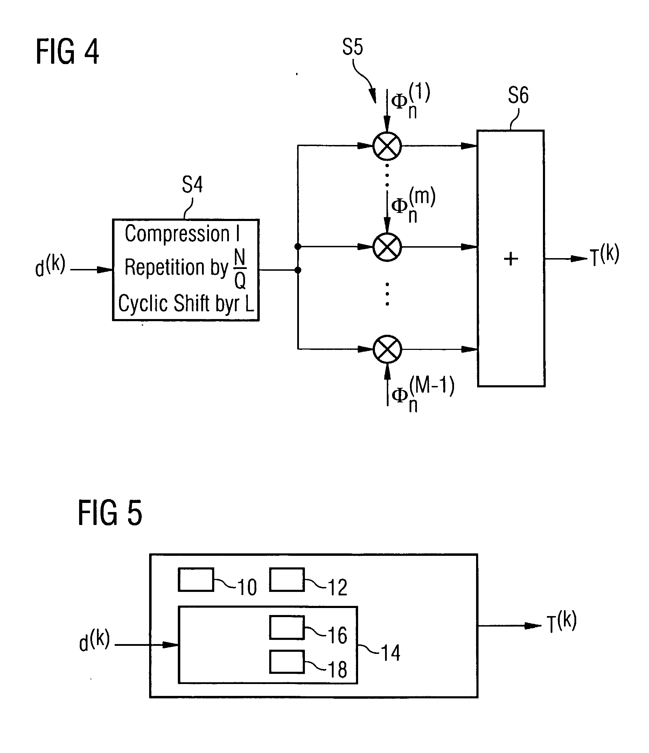

An embodiment of the invention will now be described with reference to Fig. 4. In a first, essential step S4, the data block $d^{(k)}$ relating to the specific user which is to be transmitted in one block of the transmit signal $T^{(k)}$ is repeated a number P times and compressed in time by the same factor P.

Subsequently, each element of the N-elementary repeated and compressed data block is weighted in a step S5 with the elements of a number M of different N-elementary sequences of complex numbers. The sequences of complex numbers can be calculated online or offline, wherein in the latter case, the elements of the sequences of complex numbers may be stored in a memory.

The resulting M differently weighted data blocks are summed and form the transmit signal of user k. The summation is performed element per element, such that a number M of differently weighted elements of the compressed and repeated data are summed up, resulting in one of the elements of a block of the transmit signal.

The elements of the number M of different sets of complex numbers are selected such that they can be calculated as a sum of complex exponentials.

In the specific example of the preferred embodiment, the $n^{th}$ element of the $m^{th}$ set of the M different sets of complex numbers assigned to one user with the user index k is given by

$$\Phi_n^{(m,k)} = e^{j\,2\pi/N\,(Mk+m)n} \sum_{m=0}^{M-1} e^{j-2\pi/Q\,m[(rL+n)\bmod Q]} \quad . \quad .$$

The summation over the weighted, repeated and compressed data can be written as

$$x_n^{(k)} = \sum_{r=0}^{M-1} \Phi_n^{(r,k)} d_{(rL+n)\bmod Q} \quad ,$$

wherein $d_i$ is the $i^{th}$ element of the compressed and repeated data block.

It is noted that according to the above choice, the M different sets of complex numbers are selected in a way that the subsets of subcarriers assigned to a specific user are composed of neighbouring subcarriers, such that the subcarriers assigned to the specific user form subblocks within the blocks of subcarriers. Moreover, the above choice of complex numbers provides a low Peak-to-Average Power Ratio and the allocation of the subcarriers to different users is particularly simple because the M different sequences of complex numbers are selected such that they depend on a user index k.

Since the elements of the number M of different sequences of complex numbers are selected such that they may be calculated as a sum of complex exponentials, the calculation is particularly simple. Moreover, the of elements the number M of different sets of complex numbers are independent of the signal to be transmitted, such that they can be computed offline. In the repetition and compression step S4, the factor P is chosen to be equal to N/Q, where Q is the number of symbols in the data prop relating to the specific user to be transmitted in one block of the transmit signal. This choice of the factor P provides a maximum frequency diversity.

It is emphasized that the computational complexity of the coding scheme according to the invention is linear in N, which is considerably less than the complexity of the scheme as outlined in Fig. 3. Moreover, it is noted that the compression and repetition is performed implicitly by a suitable choice of the summation indices and of the summation step width in the summation step S6.

Turning now to Fig. 5, a transmission signal generating apparatus for generating a transmit signal for transmitting multiple access data in a transmission system comprising a number N of subcarriers is schematically shown. According to the Block-IFDMA scheme of Fig. 1, the number N of subcarriers is subdivided into a number L of blocks of subcarriers. The transmission signal generating apparatus comprises a subcarrier allocation means 10 for allocating a given subset of at least two subcarriers within each block for the transmission of the signal relating to a specific user.

Moreover, the transmission signal generating apparatus includes a subcarrier mapping means 12 for mapping the signal corresponding to a data block of the specific user to be transmitted in one block of the transmit signal by the subsets of subcarriers assigned to the specific user.

The transmission signal generating apparatus further comprises a data processing means 14 being configured to repeat the data block of the specific user a number P times and to compress the data block in time by the same factor P.

Furthermore, the data processing means 14 is configured to weight each element of the repeated and compressed data block with the elements of a number M of different sets of complex numbers and to sum up a number M of differently weighted elements of the compressed and repeated data block resulting in one of the elements of a block of the transmit signal $T^{(k)}$.

Moreover, the data processing means 14 is configured to select the elements of the number M of different sets of complex numbers such that the subsets of subcarriers assigned to a specific user are composed of neighbouring subcarriers as shown in Fig. 1. In addition, the data processing means 14 is configured to select the elements of the number M of different sets of complex numbers in order to provide a low Peak-to-Average Power Ratio (PAPR) in the transmit signal.

The allocation of subcarriers by the subcarrier allocation means 10 is facilitated by the choice of the sets of complex numbers, since the data processing means 14 is configured to select the elements of the number M of different sets of complex numbers depending on the user index.

The data processing means 14 comprises a calculating unit 16 which is configured to calculate the elements of the number M of different sets of complex numbers as a sum of complex exponentials. The calculation is performed offline and the different sets of complex numbers are stored in a memory unit 18 of the data processing means 14. The compression and repetition factor P is adjusted to be equal to N/Q by the data processing means 14, where Q is the number of symbols in the data block relating to the specific user k to be transmitted in one block of the transmit signal $T^{(k)}$.

To be specific, the calculating means 16 is configured to calculate the $n^{th}$ element of the $m^{th}$ set of the M different sets of complex numbers assigned to the user with the user index k as

$$\Phi_n^{(m,k)} = e^{j2\pi/N(Mk+m)n} \sum_{m=0}^{M-1} e^{j-2\pi/Q m[(rL+n)\bmod Q]} \quad ,$$

wherein Q is the number of symbols in the data block relating to the specific user to be transmitted in one block of the transmit signal and M = Q/L is the number of subcarriers within one block of subcarriers used for transmission of the signal $T^{(k)}$ for the specific user k.

The data processing means 14 is configured to perform the summation by calculating the $n^{th}$ element of $x_n^{(k)}$ of a block of the transmit signal being assigned to the user with the user index k as

$$x_n^{(k)} = \sum_{r=0}^{M-1} \Phi_n^{(r,k)} d_{(rL+n)\bmod Q} \quad ,$$

where $d_i$ is the $i^{th}$ element of the compressed and repeated data block.

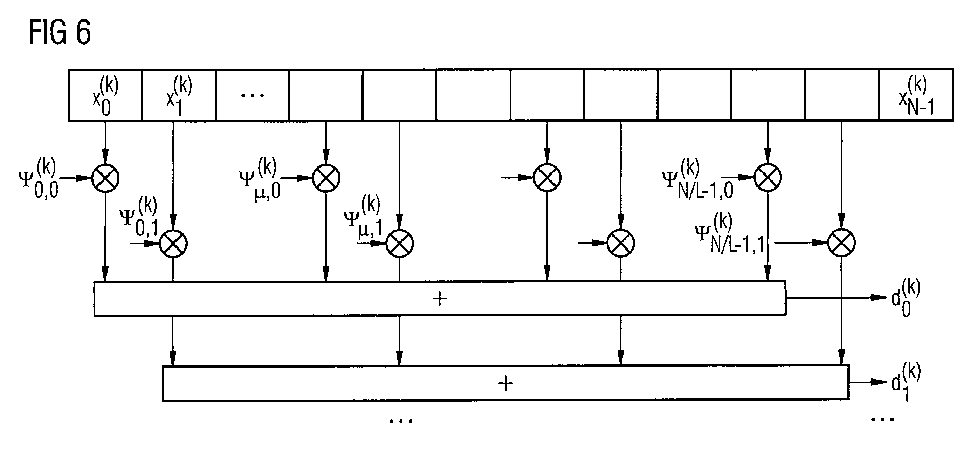

A method for decoding the data in the above way is described in the following with reference to Fig. 6. The decoding is performed by a subcarrier decoding means for mapping the signals transmitted in one block of the transmit signal onto a data blocks of the respective specific users.

In the method N/L equally spaced elements $x_n^{(k)}$ of the data block of the received signal are selected. The selection is performed in a way that the elements selected for calculating a particular symbol with index q (q = 0 ... Q-1) of the data block of the specific user (user data) are cyclically shifted by q as compared with the elements selected to calculate the symbol with the index q = 0. The value of one symbol $d_q^{(k)}$ the user data is calculated as a weighted sum over the selected elements of the transmit signal. In order to achieve this, each of the selected elements $x_{(\mu L+q)\bmod N}^{(k)}$, $\mu=0,...,N/L-1$ is multiplied with a corresponding complex coefficient $\Psi_{\mu,q}^{'(k)}$ and the sum over the resulting products is taken. The modulo operation is be applied to the indices in order to handle the case where selected indices exceed the total number N of elements of the transmit signal. The same elements $x_n^{(k)}$ of the transmit signal can contribute to more than one symbol $d_q^{(k)}$ of the decoded data of a specific user.

The weight factors used in the summation are be adapted to the weight factors used in the coding algorithm. In the above example the weight factors for the decoding method could be chosen as

$$\Psi_{\mu,q}^{(k)} = \left( \Phi_{(\mu L + q)\bmod N}^{(-\mu \bmod M,k)} \right)^{*}$$

where $\Phi_n^{(m,k)}$ are the weight factors used in the coding method and where the star denotes the complex conjugate.

## Claims

1. Method for generating a transmit signal for transmitting multiple access data by use of a transmission system comprising a number N of subcarriers,

   - wherein the number N of subcarriers is subdivided into a number L of blocks of subcarriers,
   - wherein a given subset of at least 2 subcarriers within each block is assigned to the transmission of a signal relating to a specific transmission channel, and
   - wherein the signal corresponding to a data block ($d^{(k)}$) relating to the specific transmission channel to be transmitted in one block of the transmit signal ($T^{(k)}$) is transmitted using the subsets of subcarriers assigned to the specific transmission channel,

   **characterized in that** the data block ($d^{(k)}$) is repeated a number P times and compressed in time by the same factor P.

2. The method according to claim 1, **characterized in that** the transmission system is a radio system.

3. The method according to claim 1 or 2, **characterized in that** each element of the repeated and compressed data block is weighted with respective elements of a number M of different sequences of complex numbers.

4. The method according to claim 3, **characterized in that** a number M of differently weighted elements of the compressed and repeated data are summed up resulting in one of the elements of a block of the transmit signal ($T^{(k)}$).

5. The method according to claim 4, **characterized in that** the elements of the number M of different sets of complex numbers are selected such that the subsets of subcarriers assigned to a specific transmission channel are composed of neighbouring subcarriers.

6. The method according to one of claims 4 or 5, **characterized in that** the elements of the number M of different sets of complex numbers are selected such that the transmit signal provides a low Peak-to-Average Power Ratio.

7. The method according to one of claims 4 to 6, **characterized in that** the elements of the number M of different sets of complex numbers are selected such they depend on a transmission channel index (k).

8. The method according to one of claims 4 to 7, **characterized in that** the elements of the number M of different sets of complex numbers are selected such they can be calculated as a sum of complex exponentials.

9. The method according to one of claims 4 to 8, **characterized in that** the elements of the number M of different sets of complex numbers are independent of the signal to be transmitted such that they can be computed offline.

10. The method according to one of claims 3 to 9, **characterized in that** the factor P is chosen to be equal to N/Q, where Q is the number of symbols in the data block ($d^{(k)}$) relating to the specific transmission channel to be transmitted in one block of the transmit signal ($T^{(k)}$).

11. The method according to one of claims 3 to 10, **characterized in that** the $n^{th}$ element of the $m^{th}$ set of the M different sets of complex numbers assigned to the transmission channel with the transmission channel index k is given by

$$\Phi_n^{(m,k)} = e^{j\frac{2\pi}{N}M \cdot k \cdot n} \sum_{\eta=0}^{M-1} e^{-j\frac{2\pi}{N}\eta\left((K-1)n+m\frac{N}{M}\right)} \quad ,$$

wherein M = Q/L is the number of subcarriers within one block of subcarriers used for transmission of the signal for the specific transmission channel.

12. The method according to claims 4 and 11, **characterized in that** the $n^{th}$ element $X_n^{(k)}$ of a block of the transmit signal ($T^{(k)}$) being assigned to the transmission channel with the transmission channel index k is given as

$$x_n^{(k)} = \sum_{r=0}^{M-1} \Phi_n^{(r,k)} d_{(rL+n)\bmod Q}$$

where $d_i$ is the $i^{th}$ element of the data block ($d^{(k)}$).

13. Method for decoding a transmit signal transmitting multiple access data by use of a transmission system comprising a number N of subcarriers, wherein the number N of subcarriers is subdivided into a number L of blocks of subcarriers, comprising a subcarrier decoding means for mapping the signals transmitted in one block of the transmit signal ($T^{(k)}$) onto a data blocks ($d^{(k)}$) of the respective specific transmission channels, **characterized in that** N/L equally spaced elements ($x^{(k)}_{(\mu L+q)\bmod N}$) of the data block of the transmit signal ($T^{(k)}$) are selected and **in that** the value of one symbol ($d_q^{(k)}$) of data block ($d^{(k)}$) of the specific transmission channel is calculated as a weighted sum over the selected elements ($x^{(k)}_{(\mu L+q)\bmod N}$) of the transmit signal ($T^{(k)}$).

14. Transmission signal generating apparatus for generating a transmit signal for transmitting multiple access data by use of a transmission system comprising a number N of subcarriers, wherein the number N of subcarriers is subdivided into a number L of blocks of subcarriers, comprising a subcarrier allocation means (10) for allocating a given subset of at least 2 subcarriers within each block for the transmission of the signal relating to a specific transmission channel and a subcarrier mapping means (12) for mapping the signal corresponding to a data block ($d^{(k)}$) of the specific transmission channel to be transmitted in one block of the transmit signal ($T^{(k)}$) on the subsets of subcarriers assigned to the specific transmission channel, **characterized by** a data processing means (14) being configured to repeat the data block ($d^{(k)}$) of the specific transmission channel a number P times and to compress the data block in time by the same factor P.

15. Transmission signal generating apparatus according to claim 14, **characterized in that** the transmission system is a radio system.

16. Transmission signal generating apparatus according to claim 14 or 15, **characterized in that** the data processing means (14) is configured to weight each element of the repeated and compressed data block with respective elements of a number M of different sets of complex numbers.

17. Transmission signal generating apparatus according to claim 16, **characterized in that** the data processing means (14) is configured to sum up a number M of differently weighted elements of the compressed and repeated data block resulting in one of the elements of a block of the transmit signal ($T^{(k)}$).

18. Transmission signal generating apparatus according to claim 16, **characterized in that** the data processing means (14) is configured to select the elements of the number M of different sets of complex numbers are such that the subsets of subcarriers assigned to a specific transmission channel are composed of neighbouring subcarriers.

**19.** Transmission signal generating apparatus according to one of claims 16 to 18, **characterized in that** the data processing means (14) is configured to select the elements of the number M of different sets of complex numbers in order to provide a low Peak-to-Average Power Ratio in the transmit signal ($T^{(k)}$).

**20.** Transmission signal generating apparatus according to one of claims 16 to 19, **characterized in that** the data processing means (14) is configured to select the elements of the number M of different sets of complex numbers depending on a transmission channel index (k).

**21.** Transmission signal generating apparatus according to one of claims 16 to 20, **characterized in that** the data processing means (14) is configured to calculate the elements of the number M of different sets of complex numbers as a sum of complex exponentials.

**22.** Transmission signal generating apparatus according to one of claims 16 to 21, **characterized in that** the data processing means (14) is configured to calculate the elements of the number M of different sets of complex numbers independent of the signal to be transmitted such that they can be computed offline.

**23.** Transmission signal generating apparatus according to one of claims 14 to 22, **characterized in that** the data processing means (14) is configured to adjust the factor P to be equal to N/Q, where Q is the number of symbols in the data block relating to the specific transmission channel to be transmitted in one block of the transmit signal.

**24.** Transmission signal generating apparatus according to one of claims 16 to 22, **characterized in that** the data processing means (14) is configured to calculate the $n^{th}$ element of the $m^{th}$ set of the M different sets of complex numbers assigned to the transmission channel with the transmission channel index k as

$$\Phi_n^{(m,k)} = e^{j2\pi/N(Mk+m)n} \sum_{m=0}^{M-1} e^{j-2\pi/Q\,m[(rL+n)\bmod Q]}$$

wherein Q is the number of symbols in the data block relating to the specific transmission channel to be transmitted in one block of the transmit signal and M = Q/L is the number of subcarriers within one block of subcarriers used for transmission of the signal for the specific transmission channel.

**25.** Transmission signal generating apparatus according to claims 16 and 24, **characterized in that** the data processing means (14) is configured to calculate the $n^{th}$ element $x_n^{(k)}$ of a block of the transmit signal being assigned to the transmission channel with the transmission channel index k as

$$x_n^{(k)} = \sum_{r=0}^{M-1} \Phi_n^{(r,k)} d_{(rL+n)\bmod Q}$$

where $d_i$ is the $i^{th}$ element of the data block ($d^{(k)}$).

**26.** Transmission signal receiving apparatus for receiving a transmit signal for transmitting multiple access data by use of a transmission system comprising a number N of subcarriers, wherein the number N of subcarriers is subdivided into a number L of blocks of subcarriers, comprising a subcarrier decoding means for mapping the signals transmitted in one block of the transmit signal ($T^{(k)}$) onto a data blocks ($d^{(k)}$) of the respective specific transmission channels, **characterized in that** the subcarrier decoding means is configured to select N/L equally spaced elements ($X^{(k)}_{(\mu L+q)\bmod N}$) from the data block of the transmit signal ($T^{(k)}$) and to calculate the value of one symbol ($d_q^{(k)}$) of data block ($d^{(k)}$) of the specific transmission channel as a weighted sum over the selected elements ($x^{(k)}_{(\mu L+q)\bmod N}$) of the transmit signal ($T^{(k)}$).

FIG 1

FIG 2   PRIOR ART

FIG 3   PRIOR ART

FIG 4

$\Phi_n^{(1)}$

S5

S6

S4

$d^{(k)} \longrightarrow$

Compression I
Repetition by $\frac{N}{Q}$
Cyclic Shift byr L

$\Phi_n^{(m)}$

$\otimes$

$\otimes$

$\otimes$

$+$

$\longrightarrow T^{(k)}$

$\Phi_n^{(M-1)}$

FIG 5

$d^{(k)} \longrightarrow$

10      12

16

18      14

$\longrightarrow T^{(k)}$

# FIG 6

EP 1 962 462 A1

European Patent Office

**EUROPEAN SEARCH REPORT**

Application Number

EP 07 00 3498

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FILIPPI A ET AL: "Low complexity interleaved sub-carrier allocation in OFDM multiple access systems" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 September 2004 (2004-09-26), pages 1890-1893, XP010786966 ISBN: 0-7803-8521-7 * page 1220 - page 1221, column 1 * ----- | 1-10, 13-23,26 | INV. H04L27/26 |
| X | T. FRANK, A. KLEIN, E. COSTA, AND E. SCHULZ: "Robustness of IFDMA as Air Interface Candidate for Future High Rate Mobile Radio Systems" ADVANCES IN RADIO SCIENCE, [Online] vol. 3, 2005, - 2005 pages 265-270, XP002441671 Retrieved from the Internet: URL:http://www.adv-radio-sci.net/3/265/200 5/ars-3-265-2005.pdf> [retrieved on 2007-07-09] * page 265, column 2 - page 269, column 1 * ----- | 1,2,14, 15 | |
| D,A | FRANK T ET AL: "IFDMA - A PROMISING MULTIPLE ACCESS SCHEME FOR FUTURE MOBILE RADIO SYSTEMS" IEEE INTERNATIONAL SYMPOSIUM ON PERSONAL, INDOOR AND MOBILE RADIO COMMUNICATIONS, XX, XX, vol. 2, 11 September 2005 (2005-09-11), pages 1214-1218, XP010926614 * page 1214 - page 1218 * ----- | 1-26 | |

TECHNICAL FIELDS SEARCHED (IPC)

H04L

The present search report has been drawn up for all claims

| Place of search | Date of completion of the search | Examiner |
|---|---|---|
| Berlin | 11 July 2007 | GONZALEZ GUTIERREZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. FRANK ; A. KLEIN ; E. COSTA ; E. SCHULZ.** IFDMA - A Promising Multiple Access Scheme for Future Mobile Radio Systems. *PIMRC 2005,* September 2005